# EUROPÄISCHE PATENTSCHRIFT

(11) **EP 4 578 623 B1**
(45) Veröffentlichungstag und Bekanntmachung des Hinweises auf die Patenterteilung: **13.05.2026**
(21) Anmeldenummer: 24220112.7
(22) Anmeldetag: 16.12.2024
(51) Int. Cl.: B29C 45/14, B44C 5/04, B60R 13/04, F21S 43/50, B29C 45/00, B44F 1/06

(54) **VERFAHREN ZUR HERSTELLUNG EINES PARTIELL DURCHLEUCHTBAREN AUSSENVERKLEIDUNGSTEILS FÜR EIN FAHRZEUG**
METHOD FOR PRODUCING A PARTIALLY TRANSLUCENT OUTER TRIM PART FOR A VEHICLE
PROCÉDÉ DE FABRICATION D'UN ÉLÉMENT DE GARNITURE EXTÉRIEURE PARTIELLEMENT TRANSPARENT POUR UN VÉHICULE

(30) Priorität: 28.12.2023 DE 102023136763
(43) Veröffentlichungstag der Anmeldung: 02.07.2025
(73) Patentinhaber: RESRG Automotive SE & Co. KG, 95111 Rehau (DE)
(72) Erfinder: Beyerlein, Patrick, 95111 Rehau (DE); Friese, Dominik, 95111 Rehau (DE); Jäger, Christoph, 95111 Rehau (DE); Kätzel, Patrick, 95111 Rehau (DE); Leister, Christian, 95030 Hof (DE)
(74) Vertreter: Grünecker Patent- und Rechtsanwälte PartG mbB

(56) Entgegenhaltungen:
- EP-A1- 3 632 749
- EP-A1- 3 653 358
- DE-A1- 102017 215 126
- JP-A- H01 222 944
- JP-A- S 591 236

## Beschreibung

Die vorliegende Erfindung betrifft ein Verfahren zur Herstellung eines partiell durchleuchtbaren Außenverkleidungsteils für ein Fahrzeug.

Es sind eine Vielzahl von Herstellungsverfahren für derartige Außenverkleidungsteile bekannt. Hierzu sei nur beispielhaft auf die Dokumente DE 10 2020 000 921 A1, DE 10 2017 214 943 A1, DE 10 2020 105 729 A1, DE 10 2021 134 475 A1, DE 10 2020 134 132 A1 oder EP 3 632 749 A1 verwiesen.

Die DE 10 2017 215126 A1 betrifft ein Verfahren zur Herstellung eines Kunststoffbauteils für ein Fahrzeug. Ein Dekorträger wird in einer Formhälfte eines Spritzgießwerkzeugs positioniert, während in der gegenüberliegenden Formhälfte ein Foliensystem aus einer Trägerfolie und einer Schutzschicht angeordnet ist. Ein transparenter Kunststoff wird zwischen Dekorträger und Foliensystem eingespritzt. Die Schutzschicht verbindet sich mit der durch das Spritzgussmaterial gebildeten Kunststoffschicht, während die Trägerfolie vom fertigen Bauteil ablösbar ist. Der Einspritzvorgang kann dazu führen, dass Dekorträger und/oder Foliensystem in ihre endgültige Form gedrückt werden. Der Dekorträger kann als transparente oder farbig transparente Kunststofffolie ausgestaltet sein und ein Bild tragen, das mittels Druck oder Farbschicht aufgebracht ist. Eine Beleuchtungseinrichtung kann vorgesehen sein, um die Kunststoffschicht und gegebenenfalls ein Dekorelement zu durchleuchten.

In der EP 3 653 358 A1 wird ein Verfahren zur Herstellung eines Karosserieteils offenbart.

Eine Dekorfolie mit einem lichtdurchlässigen und einem opaken Bereich wird an der Wand der Formkavität angeordnet, wobei der opake Bereich an der Kavitätswand anliegt und der lichtdurchlässige Bereich in Abstand dazu positioniert ist. Beim Einspritzen von Kunststoffmaterial wird der lichtdurchlässige Bereich durch den Einspritzdruck gegen die Formwand gedrückt. Die Dekorfolie umfasst eine lichtdurchlässige Folie und ein darauf angeordnetes opakes Element und kann zusätzlich eine Farbschicht tragen.

Die EP 3 632 749 A1 beschreibt ein Verfahren zur Herstellung eines durchleuchtbaren Verkleidungsteils. Ein transparenter oder transluzenter Grundkörper wird bereitgestellt und anschließend mit einer farbgebenden Beschichtung versehen. In die Beschichtung werden Perforationen eingebracht, die diese vollständig durchdringen und eine Durchleuchtung ermöglichen. Über der perforierten Beschichtung wird eine Klarlackschicht aufgebracht, welche die Beschichtung und die Perforationen versiegelt und die Perforationen gleichzeitig ausfüllt.

Die JP S59-1236 A betrifft ein Verfahren zur Herstellung eines glänzenden Musters unter Verwendung einer bedruckten Aluminiumfolie. Die Folie wird mit der Druckseite an der Kavitätswand platziert, wobei der Druck Aussparungen aufweist. Beim Hinterspritzen wird Material in die Aussparungen gedrückt. Die obere Oberfläche der Folie weist eine Beschichtung auf, die mit UV-härtbarer Druckfarbe bedruckt ist. Die JP H01-222944 A offenbart ebenfalls ein Hinterspritzverfahren unter Verwendung eines mehrschichtigen Folienverbundes. Dieser weist einen Bedruckungsbereich mit Aussparungen auf. Unterhalb befindet sich eine Beschichtung auf einer Metallfolie, die über eine Klebschicht mit einer Kunststofffolie verbunden ist.

Aufgabe der vorliegenden Erfindung ist es ein alternatives Verfahren zur Herstellung eines Außenverkleidungsteils anzugeben.

Diese Aufgabe wird vorliegend gelöst durch ein Verfahren zur Herstellung eines partiell durchleuchtbaren Außenverkleidungsteils für ein Fahrzeug, wobei das Außenverkleidungsteil einen Grundkörper aufweist, umfassend die folgenden Schritte:
- Bereitstellen einer Farbfolie, die wenigstens eine Trägerfolie aus einem für sichtbares Licht transparenten oder transluzenten Kunststoffmaterial und eine auf der Trägerfolie angeordnete, lichtundurchlässige und farbgebende Schicht aufweist, wobei die farbgebende Schicht eine Vielzahl von Aussparungen aufweist, um hierdurch eine partielle Durchleuchtbarkeit der Farbfolie zu ermöglichen,
- Bereitstellen einer Designfolie, die wenigstens eine Trägerfolie aus einem für sichtbares Licht transparenten oder transluzenten Kunststoffmaterial, eine transparente oder transluzente Haftvermittlerschicht und eine zwischen der Trägerfolie und der Haftvermittlerschicht angeordnete transparente oder transluzente Dekorschicht aufweist,
- Einlegen des Farbfolie in ein Spritzgusswerkzeug, das wenigstens zwei Werkzeugformhälften aufweist, die im geschlossenen Zustand zwischen sich eine den Grundkörper definierende Kavität ausbilden, wobei die farbgebende Schicht der Farbfolie an der Innenwand einer der Werkzeugformhälften anliegt oder der Innenwand einer der Werkzeugformhälften gegenüberliegt, und Einlegen der Designfolie in das Spritzgusswerkzeug, wobei die Trägerfolie der Designfolie an der Innenwand der anderen Werkzeugformhälften anliegt oder der Innenwand der anderen Werkzeugformhälften gegenüberliegt,

- Einspritzen eines den Grundkörper bildenden plastifizierten Kunststoffmaterials in die Kavität, wobei das Kunststoffmaterial aus einem für sichtbares Licht transparenten oder transluzenten Kunststoffmaterial besteht, wobei das plastifizierte Kunststoffmaterial so eingespritzt wird, dass es die Farbfolie und die Designfolie derart hinterspritzt, dass der Grundkörper zwischen der Farbfolie und der Designfolie ausgebildet wird und sich mit beiden Folien verbindet , wobei durch den Spritzdruck und/oder den Nachdruck des den Grundkörper bildenden Kunststoffmaterials Teilbereiche der Trägerfolie der Farbfolie in die Aussparungen der farbgebenden Schicht gedrückt werden,
- Aufbringen einer die Farbfolie und die Teilbereiche versiegelnden Versiegelungsschicht aus einem transparenten oder transluzenten Kunststoffmaterial.

Die Aussparungen in der farbgebenden Schicht der Farbfolie können beispielsweise durch ein Siebdruckverfahren oder durch ein Tintenstrahldruckverfahren oder durch ein Lackierverfahren mit anschließender Laserentfernung von Teilen der aufgebrachten Lackschicht realisiert werden.

Das Kunststoffmaterial der Trägerfolie der Farbfolie und/oder das Kunststoffmaterial der Trägerfolie der Designfolie kann bevorzugt Polypropylen umfassen oder aus Polypropylen bestehen.

Das Kunststoffmaterial des Grundkörpers kann bevorzugt ebenfalls Polypropylen umfassen oder aus Polypropylen bestehen.

Der Haftvermittler der Haftvermittlerschicht ist bevorzugt dazu vorgesehen die Haftung zwischen dem Polypropylen des Grundkörpers und der Designfolie zu verbessern oder zu ermöglichen.

Die Versiegelungsschicht kann bevorzugt Polyurethan umfassen oder aus Polyurethan bestehen.

Wenigstens einer der beiden Folien (Designfolie und/oder Farbfolie) kann in einer Variante des Verfahrens wenigstens einen Heizdraht oder wenigstens einen Antennendraht oder wenigstens eine elektrische Schaltung oder wenigstens eine Leuchtdiode aufweisen. Alternativ oder ergänzend kann als Variante wenigstens eine zusätzliche Funktionsfolie vorgesehen sein, die mit einer der beiden Folien (Designfolie und/oder Farbfolie) und/oder mit dem Grundkörper verbunden ist, wobei die Funktionsfolie wenigstens einen Heizdraht oder wenigstens einen Antennendraht oder wenigstens eine elektrische Schaltung oder wenigstens eine Leuchtdiode aufweist.

Der Grundkörper weist bevorzugt eine Wandstärke im Bereich von 0,8 mm bis 5,5 mm, vorzugsweise im Bereich von 1,3 mm bis 2,8 mm auf.

Das Aufbringen der Versiegelungsschicht kann bevorzugt in einem Spritzgussverfahren (gegebenenfalls in demselben Spritzgusswerkzeug wie der Grundkörper) oder durch ein Flutungsverfahren oder durch ein Tauchverfahren oder durch ein Reaction Injection Moulding-Verfahren (RIM) erfolgen.

Das Außenverkleidungsteil kann beispielsweise eine Stoßfängerverkleidung oder eine Türaußenverkleidung oder eine Heckklappenaußenverkleidung oder eine Kotflügelverkleidung oder ein Frontpanel oder eine Kühlerverkleidung oder einer Schwellerverkleidung oder eines Spoilers, oder ein Bestandteil einer Stoßfängerverkleidung oder einer Türaußenverkleidung oder einer Heckklappenaußenverkleidung oder einer Kotflügelverkleidung oder eines Frontpanel oder einer Kühlerverkleidung oder einer Schwellerverkleidung oder eines Spoilers sein. Ein Frontpanel ist derjenige Teil eines Fahrzeugs an deren Stelle sich bei Verbrennungsfahrzeugen der Kühlergrill befunden hat. Insbesondere bei Elektrofahrzeugen ist dieses Frontpanel nicht mehr als Lufteinlass zu dem Kühler (den es hier nicht mehr gibt) ausgebildet, sondern als Designelement in der Fahrzeugmitte vorgesehen.

Das sichtbare Licht, auch als Licht- oder Farbspektrum bezeichnet, ist der Teil des elektromagnetischen Spektrums, den das menschliche Auge wahrnehmen kann. Es reicht von Rot (etwa 760 nm) bis Violett (etwa 380 nm). Vorliegend bedeutet der Begriff "aus einem für sichtbares Licht transparenten oder transluzenten Kunststoffmaterial", dass wenigstens eine Wellenlänge - aber nicht zwingend alle Wellenlängen - aus dem Licht- oder Farbspektrum das Kunststoffmaterial passieren kann.

Ein Material wird als transparent bezeichnet, wenn es von Licht im sichtbaren Bereich durchdrungen werden kann. Ein Element mit einem Transmissionsgrad von bis etwa 90% gilt noch als transparent. Ein Element wird als transluzent bezeichnet, wenn es von Licht im sichtbaren Bereich durchdrungen wird, dabei aber keine klare Unterscheidung von Objekten mehr zulässt, die sich hinter dem Element befinden. Ein Element mit einem Transmissionsgrad bis etwa 30% gilt noch als transluzent. Der Transmissionsgrad eines Materials bzw. Bauteils ist der Anteil des Lichtstroms, der durch das Material bzw. Bauteil hindurchgeht. Der Transmissionsgrad ist also das Verhältnis der vom Material oder dem Bauteil durchgelassenen Lichtintensität zur einfallenden Lichtintensität und nimmt Werte zwischen 0% und 100% an.

### Ausführungsbeispiele

Im Folgenden wird die Erfindung anhand lediglich Ausführungsbeispiele darstellender Zeichnungen erläutert. Es zeigen schematisch:

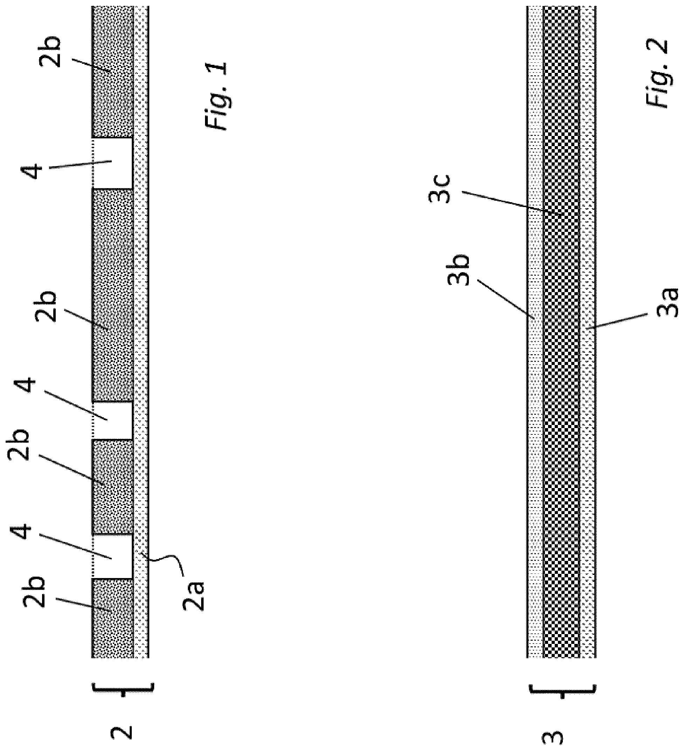

- Fig. 1-4: schematische Darstellungen der einzelnen Verfahrensschritte des erfindungsgemäßen Verfahrens.

In den Figuren werden gleiche oder funktionsgleiche Elemente mit den gleichen Bezugszeichen versehen.

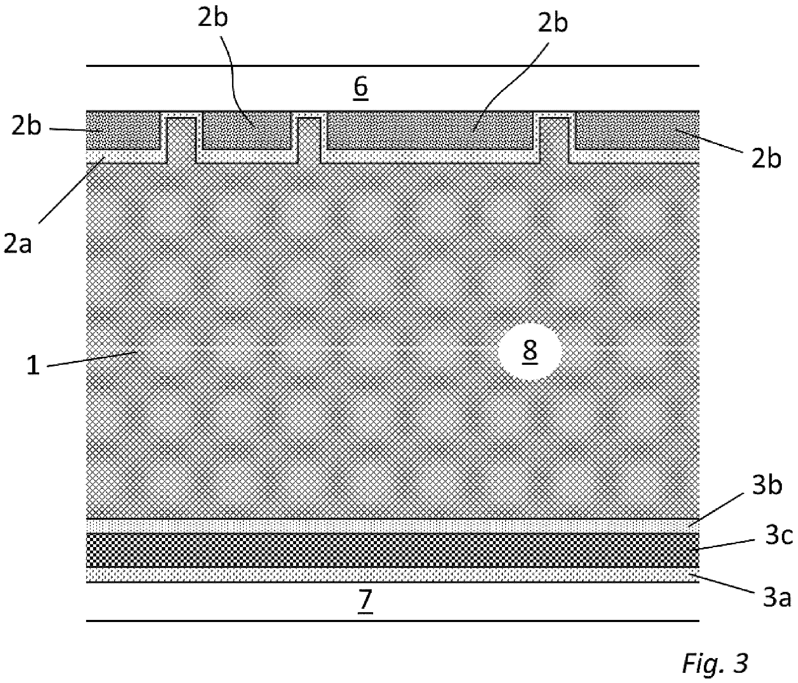

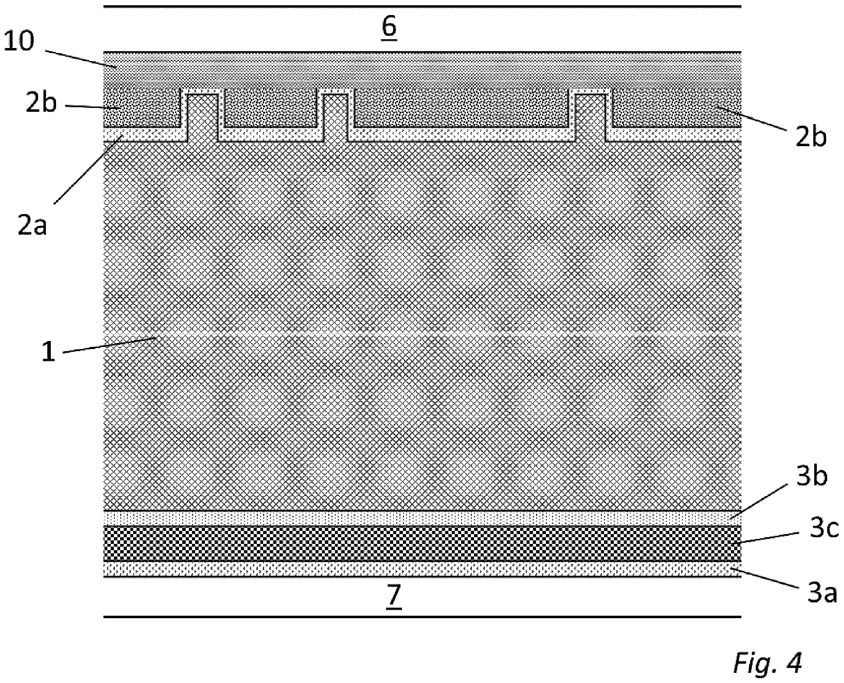

Die nachfolgenden Abbildungen zeigen stark schematisierte Querschnitte durch die verschiedenen Stufen eines Außenverkleidungsteils während dessen Herstellung. Das Verfahren zur Herstellung eines partiell durchleuchtbaren Außenverkleidungsteils für ein Fahrzeug, wobei das Außenverkleidungsteil einen Grundkörper 1 aufweist, umfasst die folgenden Schritte:
- Bereitstellen einer Farbfolie 2, die wenigstens eine Trägerfolie 2a aus einem für sichtbares Licht transparenten oder transluzenten Kunststoffmaterial und eine auf der Trägerfolie 2a angeordnete, lichtundurchlässige und farbgebende Schicht 2b aufweist, wobei die farbgebende Schicht 2b eine Vielzahl von Aussparungen 4 aufweist, um hierdurch eine partielle Durchleuchtbarkeit der Farbfolie 2 zu ermöglichen (vgl. Fig. 1),
- Bereitstellen einer Designfolie 3, die wenigstens eine Trägerfolie 3a aus einem für sichtbares Licht transparenten oder transluzenten Kunststoffmaterial, eine transparente oder transluzente Haftvermittlerschicht 3b und eine zwischen der Trägerfolie 3a und der Haftvermittlerschicht 3b angeordnete transparente oder transluzente Dekorschicht 3c aufweist (vgl. Fig. 2),
- Einlegen der Farbfolie 2 in ein Spritzgusswerkzeug, das wenigstens zwei Werkzeugformhälften 6, 7 aufweist, die im geschlossenen Zustand zwischen sich eine den Grundkörper 1 definierende Kavität 8 ausbilden, wobei die farbgebende Schicht 2b der Farbfolie 2 an der Innenwand einer der Werkzeugformhälften 6 anliegt oder der Innenwand einer der Werkzeugformhälften 6 gegenüberliegt, und Einlegen der Designfolie 3 in das Spritzgusswerkzeug, wobei die Trägerfolie 3a der Designfolie 3 an der Innenwand der anderen Werkzeugformhälften 7 anliegt oder der Innenwand der anderen Werkzeugformhälften 7 gegenüberliegt (vgl. Fig. 3),
- Einspritzen eines den Grundkörper 1 bildenden plastifizierten Kunststoffmaterials in die Kavität 8, wobei das Kunststoffmaterial aus einem für sichtbares Licht transparenten oder transluzenten Kunststoffmaterial besteht, wobei das plastifizierte Kunststoffmaterial so eingespritzt wird, dass es die Farbfolie 2 und die Designfolie 3 derart hinterspritzt, dass der Grundkörper 1 zwischen der Farbfolie 2 und der Designfolie 3 ausgebildet wird und sich mit beiden Folien 2, 3 verbindet, wobei durch den Spritzdruck und/oder den Nachdruck des den Grundkörper 1 bildenden Kunststoffmaterials Teilbereiche 9 der Trägerfolie 2a der Farbfolie in die Aussparungen 4 der farbgebenden Schicht 2b gedrückt werden (vgl. Fig. 3),
- Aufbringen einer die Farbfolie 2 und die Teilbereiche 9 versiegelnden Versiegelungsschicht 10 aus einem transparenten oder transluzenten Kunststoffmaterial (vgl. Fig. 4).

Die Aussparungen 4 in der farbgebenden Schicht 2b der Farbfolie 2 können durch ein Siebdruckverfahren oder durch ein Tintenstrahldruckverfahren oder durch ein Lackierverfahren mit anschließender Laserentfernung von Teilen der aufgebrachten Lackschicht realisiert werden.

Das Kunststoffmaterial der Trägerfolie 2a der Farbfolie 2 und das Kunststoffmaterial der Trägerfolie 3a der Designfolie 3 umfasst Polypropylen umfasst oder besteht aus Polypropylen.

Das Kunststoffmaterial des Grundkörpers 1 umfasst ebenfalls Polypropylen oder besteht ebenfalls aus Polypropylen.

Die Versiegelungsschicht 10 umfasst Polyurethan oder besteht aus Polyurethan. Der Haftvermittler der Haftvermittlerschicht 3b ist dazu vorgesehen die Haftung zwischen dem Polypropylen des Grundkörpers 1 und der Designfolie 3 zu verbessern oder zu ermöglichen.

Wenigstens eine der beiden Folien 2, 3 kann wenigstens einen Heizdraht oder wenigstens einen Antennendraht oder wenigstens eine elektrische Schaltung oder wenigstens eine Leuchtdiode aufweist oder, es kann wenigstens eine zusätzliche Funktionsfolie vorgesehen sein, die mit einer der Folien 2, 3 und/oder mit dem Grundkörper 1 verbunden ist, wobei die Funktionsfolie wenigstens einen Heizdraht oder wenigstens einen Antennendraht oder wenigstens eine elektrische Schaltung oder wenigstens eine Leuchtdiode aufweist (hier nicht näher dargestellt).

Das Aufbringen der Versiegelungsschicht 10 erfolgt vorliegend in einem Spritzgussverfahren in demselben Spritzgusswerkzeug. Alternativ kann das Aufbringen durch ein Flutungsverfahren oder durch ein Tauchverfahren oder durch ein Reaction Injection Moulding-Verfahren (RIM) erfolgen.

Das Außenverkleidungsteil kann eine Stoßfängerverkleidung oder eine Türaußenverkleidung oder eine Heckklappenaußenverkleidung oder eine Kotflügelverkleidung oder ein Frontpanel oder eine Kühlerverkleidung oder eine Schwellerverkleidung oder eines Spoilers, oder ein Bestandteil einer Stoßfängerverkleidung oder einer Türaußenverkleidung oder einer Heckklappenaußenverkleidung oder einer Kotflügelverkleidung oder eines Frontpanel oder einer Kühlerverkleidung oder einer Schwellerverkleidung oder eines Spoilers sein.

## Patentansprüche

1. Verfahren zur Herstellung eines partiell durchleuchtbaren Außenverkleidungsteils für ein Fahrzeug, wobei das Außenverkleidungsteil einen Grundkörper (1) aufweist, umfassend die folgenden Schritte:
- Bereitstellen einer Farbfolie (2), die wenigstens eine Trägerfolie (2a) aus einem für sichtbares Licht transparenten oder transluzenten Kunststoffmaterial und eine auf der Trägerfolie (2a) angeordnete, lichtundurchlässige und farbgebende Schicht (2b) aufweist, wobei die farbgebende Schicht (2b) eine Vielzahl von Aussparungen (4) aufweist, um hierdurch eine partielle Durchleuchtbarkeit der Farbfolie (2) zu ermöglichen,
- Bereitstellen einer Designfolie (3), die wenigstens eine Trägerfolie (3a) aus einem für sichtbares Licht transparenten oder transluzenten Kunststoffmaterial, eine transparente oder transluzente Haftvermittlerschicht (3b) und eine zwischen der Trägerfolie (3a) und der Haftvermittlerschicht (3b) angeordnete transparente oder transluzente Dekorschicht (3c) aufweist,
- Einlegen der Farbfolie (2) in ein Spritzgusswerkzeug, das wenigstens zwei Werkzeugformhälften (6, 7) aufweist, die im geschlossenen Zustand zwischen sich eine den Grundkörper (1) definierende Kavität (8) ausbilden, wobei die farbgebende Schicht (2b) der Farbfolie (2) an der Innenwand einer der Werkzeugformhälften (6) anliegt oder der Innenwand einer der Werkzeugformhälften (6) gegenüberliegt, und Einlegen der Designfolie (3) in das Spritzgusswerkzeug, wobei die Trägerfolie (3a) der Designfolie (3) an der Innenwand der anderen Werkzeugformhälften (7) anliegt oder der Innenwand der anderen Werkzeugformhälften (7) gegenüberliegt,
- Einspritzen eines den Grundkörper (1) bildenden plastifizierten Kunststoffmaterials in die Kavität (8), wobei das Kunststoffmaterial aus einem für sichtbares Licht transparenten oder transluzenten Kunststoffmaterial besteht, wobei das plastifizierte Kunststoffmaterial so eingespritzt wird, dass es die Farbfolie (2) und die Designfolie (3) derart hinterspritzt, dass der Grundkörper (1) zwischen der Farbfolie (2) und der Designfolie (3) ausgebildet wird und sich mit beiden Folien (2, 3) verbindet, wobei durch den Spritzdruck und/oder den Nachdruck des den Grundkörper (1) bildenden Kunststoffmaterials Teilbereiche (9) der Trägerfolie (2a) der Farbfolie in die Aussparungen (4) der farbgebenden Schicht (2b) gedrückt werden,
- Aufbringen einer die Farbfolie (2) und die Teilbereiche (9) versiegelnden Versiegelungsschicht (10) aus einem transparenten oder transluzenten Kunststoffmaterial.

2. Verfahren nach Anspruch 1, **dadurch gekennzeichnet, dass** die Aussparungen (4) in der farbgebenden Schicht (2b) der Farbfolie (2) durch ein Siebdruckverfahren oder durch ein Tintenstrahldruckverfahren oder durch ein Lackierverfahren mit anschließender Laserentfernung von Teilen der aufgebrachten Lackschicht realisiert wird.

3. Verfahren nach Anspruch 1 oder 2, **dadurch gekennzeichnet, dass** das Kunststoffmaterial der Trägerfolie (2a) der Farbfolie (2) und/oder das Kunststoffmaterial der Trägerfolie (3a) der Designfolie (3) Polypropylen umfasst oder aus Polypropylen besteht.

4. Verfahren nach einem der vorstehenden Ansprüche, **dadurch gekennzeichnet, dass** das Kunststoffmaterial des Grundkörpers (1) Polypropylen umfasst oder aus Polypropylen besteht.

5. Verfahren nach Anspruch 4, **dadurch gekennzeichnet, dass** der Haftvermittler der Haftvermittlerschicht (3b) dazu vorgesehen ist die Haftung zwischen dem Polypropylen des Grundkörpers (1) und der Designfolie (3) zu verbessern oder zu ermöglichen.

6. Verfahren nach einem der vorstehenden Ansprüche, **dadurch gekennzeichnet, dass** die Versiegelungsschicht (10) Polyurethan umfasst oder aus Polyurethan besteht.

7. Verfahren nach einem der vorstehenden Ansprüche, **dadurch gekennzeichnet, dass** wenigstens einer der beiden Folien (2, 3) wenigstens einen Heizdraht oder wenigstens einen Antennendraht oder wenigstens eine elektrische Schaltung oder wenigstens eine Leuchtdiode aufweist oder, dass wenigstens eine zusätzliche Funktionsfolie vorgesehen ist, die mit einer der Folien (2, 3) und/oder mit dem Grundkörper (1) verbunden ist, wobei die Funktionsfolie wenigstens einen Heizdraht oder wenigstens einen Antennendraht oder wenigstens eine elektrische Schaltung oder wenigstens eine Leuchtdiode aufweist.

8. Verfahren nach einem der vorstehenden Ansprüche, **dadurch gekennzeichnet, dass** das Aufbringen der Versiegelungsschicht (10) in einem Spritzgussverfahren oder durch ein Flutungsverfahren oder durch ein Tauchverfahren oder durch ein Reaction Injection Moulding-Verfahren (RIM) erfolgt.

9. Verfahren nach einem der vorstehenden Ansprüche, **dadurch gekennzeichnet, dass** das Außenverkleidungsteil eine Stoßfängerverkleidung oder eine Türaußenverkleidung oder eine Heckklappenaußenverkleidung oder eine Kotflügelverkleidung oder ein Frontpanel oder eine Kühlerverkleidung oder eine Schwellerverkleidung oder ein Spoiler, oder ein Bestandteil einer Stoßfängerverkleidung oder einer Türaußenverkleidung oder einer Heckklappenaußenverkleidung oder einer Kotflügelverkleidung oder eines Frontpanel oder einer Kühlerverkleidung oder einer Schwellerverkleidung oder eines Spoilers ist.

## Claims

1. Method for producing a partially light-transmissive exterior trim part for a vehicle, wherein the exterior trim part comprises a base body (1), comprising the following steps:
- Providing a color film (2) which has at least one carrier film (2a) made of a plastic material that is transparent or translucent to visible light and an opaque and color-imparting layer (2b) arranged on the carrier film (2a), wherein the color-imparting layer (2b) has a plurality of cut-outs (4) in order thereby to enable partial light transmissivity of the color film (2),
- Providing a design film (3) which has at least one carrier film (3a) made of a plastic material that is transparent or translucent to visible light, a transparent or translucent adhesion promoter layer (3b), and a transparent or translucent decorative layer (3c) arranged between the carrier film (3a) and the adhesion promoter layer (3b),
- Inserting the color film (2) into an injection molding tool which has at least two tool mold halves (6, 7) which, in the closed state, form between them a cavity (8) defining the base body (1), wherein the color-imparting layer (2b) of the color film (2) bears against the inner wall of one of the tool mold halves (6) or lies opposite the inner wall of one of the tool mold halves (6), and inserting the design film (3) into the injection molding tool, wherein the carrier film (3a) of the design film (3) bears against the inner wall of the other tool mold half (7) or lies opposite the inner wall of the other tool mold half (7),
- Injecting a plasticized plastic material forming the base body (1) into the cavity (8), wherein the plastic material consists of a plastic material that is transparent or translucent to visible light, wherein the plasticized plastic material is injected in such a manner that it back-injects the color film (2) and the design film (3) such that the base body (1) is formed between the color film (2) and the design film (3) and bonds to both films (2, 3), wherein, by the injection pressure and/or the holding pressure of the plastic material forming the base body (1), partial regions (9) of the carrier film (2a) of the color film are pressed into the cut-outs (4) of the color-imparting layer (2b),
- Applying a sealing layer (10) made of a transparent or translucent plastic material, sealing the color film (2) and the partial regions (9).

2. Method according to claim 1, **characterized in that** the cut-outs (4) in the color-imparting layer (2b) of the color film (2) are realized by a screen printing process or by an inkjet printing process or by a coating process with subsequent laser removal of parts of the applied coating layer.

3. Method according to claim 1 or 2, **characterized in that** the plastic material of the carrier film (2a) of the color film (2) and/or the plastic material of the carrier film (3a) of the design film (3) comprises polypropylene or consists of polypropylene.

4. Method according to one of the preceding claims, **characterized in that** the plastic material of the base body (1) comprises polypropylene or consists of polypropylene.

5. Method according to claim 4, **characterized in that** the adhesion promoter of the adhesion promoter layer (3b) is intended to improve or enable the adhesion between the polypropylene of the base body (1) and the design film (3).

6. Method according to one of the preceding claims, **characterized in that** the sealing layer (10) comprises polyurethane or consists of polyurethane.

7. Method according to one of the preceding claims, **characterized in that** at least one of the two films (2, 3) has at least one heating wire or at least one antenna wire or at least one electrical circuit or at least one light-emitting diode, or that at least one additional functional film is provided which is connected to one of the films (2, 3) and/or to the base body (1), wherein the functional film has at least one heating wire or at least one antenna wire or at least one electrical circuit or at least one light-emitting diode.

8. Method according to one of the preceding claims, **characterized in that** the application of the sealing layer (10) is carried out in an injection molding process or by a flooding process or by a dipping process or by a reaction injection molding process (RIM).

9. Method according to one of the preceding claims, **characterized in that** the exterior trim part is a bumper cover or an outer door trim or an outer tailgate trim or a fender trim or a front panel or a radiator cover or a rocker panel trim or a spoiler, or a constituent part of a bumper cover or an outer door trim or an outer tailgate trim or a fender trim or a front panel or a radiator cover or a rocker panel trim or a spoiler.

## Revendications

1. Procédé de fabrication d'une pièce de revêtement extérieur partiellement translucide pour un véhicule, la pièce de revêtement extérieur comprenant un corps de base (1), comprenant les étapes suivantes :
- Mise à disposition d'un film de couleur (2) comportant au moins un film support (2a) en un matériau plastique transparent ou translucide pour la lumière visible et une couche (2b) opaque et conférant la couleur disposée sur le film support (2a), la couche conférant la couleur (2b) comportant une pluralité d'évidements (4) afin de permettre ainsi une translucidité partielle du film de couleur (2),
- Mise à disposition d'un film de design (3) comportant au moins un film support (3a) en un matériau plastique transparent ou translucide pour la lumière visible, une couche d'agent d'adhérence (3b) transparente ou translucide et une couche décorative (3c) transparente ou translucide disposée entre le film support (3a) et la couche d'agent d'adhérence (3b),
- Insertion du film de couleur (2) dans un moule d'injection comportant au moins deux demi-coquilles de moule (6, 7) qui, à l'état fermé, forment entre elles une cavité (8) définissant le corps de base (1), la couche conférant la couleur (2b) du film de couleur (2) étant en appui contre la paroi intérieure de l'une des demi-coquilles de moule (6) ou faisant face à la paroi intérieure de l'une des demi-coquilles de moule (6), et insertion du film de design (3) dans le moule d'injection, le film support (3a) du film de design (3) étant en appui contre la paroi intérieure de l'autre demi-coquille de moule (7) ou faisant face à la paroi intérieure de l'autre demi-coquille de moule (7),
- Injection d'un matériau plastique plastifié formant le corps de base (1) dans la cavité (8), le matériau plastique étant constitué d'un matériau plastique transparent ou translucide pour la lumière visible, le matériau plastique plastifié étant injecté de telle sorte qu'il surmoule le film de couleur (2) et le film de design (3) de manière à ce que le corps de base (1) soit formé entre le film de couleur (2) et le film de design (3) et se lie aux deux films (2, 3), des zones partielles (9) du film support (2a) du film de couleur étant, sous l'effet de la pression d'injection et/ou de la pression de maintien du matériau plastique formant le corps de base (1), poussées dans les évidements (4) de la couche conférant la couleur (2b),
- Application d'une couche d'étanchéité (10) en un matériau plastique transparent ou translucide, étanchéifiant le film de couleur (2) et les zones partielles (9).

2. Procédé selon la revendication 1, **caractérisé en ce que** les évidements (4) dans la couche conférant la couleur (2b) du film de couleur (2) sont réalisés par un procédé de sérigraphie ou par un procédé d'impression à jet d'encre ou par un procédé de vernissage avec élimination ultérieure, au laser, de parties de la couche de vernis appliquée.

3. Procédé selon la revendication 1 ou 2, **caractérisé en ce que** le matériau plastique du film support (2a) du film de couleur (2) et/ou le matériau plastique du film support (3a) du film de design (3) comprend du polypropylène ou est constitué de polypropylène.

4. Procédé selon l'une des revendications précédentes, **caractérisé en ce que** le matériau plastique du corps de base (1) comprend du polypropylène ou est constitué de polypropylène.

5. Procédé selon la revendication 4, **caractérisé en ce que** l'agent d'adhérence de la couche d'agent d'adhérence (3b) est prévu pour améliorer ou permettre l'adhésion entre le polypropylène du corps de base (1) et le film de design (3).

6. Procédé selon l'une des revendications précédentes, **caractérisé en ce que** la couche d'étanchéité (10) comprend du polyuréthane ou est constituée de polyuréthane.

7. Procédé selon l'une des revendications précédentes, **caractérisé en ce qu'**au moins l'un des deux films (2, 3) comporte au moins un fil chauffant ou au moins un fil d'antenne ou au moins un circuit électrique ou au moins une diode électroluminescente, ou qu'au moins un film fonctionnel supplémentaire est prévu, lequel est relié à l'un des films (2, 3) et/ou au corps de base (1), le film fonctionnel comportant au moins un fil chauffant ou au moins un fil d'antenne ou au moins un circuit électrique ou au moins une diode électroluminescente.

8. Procédé selon l'une des revendications précédentes, **caractérisé en ce que** l'application de la couche d'étanchéité (10) est effectuée dans un procédé de moulage par injection ou par un procédé de coulée (flooding) ou par un procédé de trempage ou par un procédé de moulage par injection réactionnelle (RIM).

9. Procédé selon l'une des revendications précédentes, **caractérisé en ce que** la pièce de revêtement extérieur est un habillage de pare-chocs ou un habillage extérieur de porte ou un habillage extérieur de hayon ou un habillage d'aile ou un panneau avant ou un habillage de radiateur ou un habillage de bas de caisse ou un spoiler, ou un élément constitutif d'un habillage de pare-chocs ou d'un habillage extérieur de porte ou d'un habillage extérieur de hayon ou d'un habillage d'aile ou d'un panneau avant ou d'un habillage de radiateur ou d'un habillage de bas de caisse ou d'un spoiler.
